Europäisches Patentamt

European Patent Office

Office européen des brevets

(19)

(11) EP 0 919 848 A1

(12) DEMANDE DE BREVET EUROPEEN

(43) Date de publication:
02.06.1999 Bulletin 1999/22

(51) Int. Cl.⁶: **G02F 1/035**, G02F 1/313

(21) Numéro de dépôt: 98402831.6

(22) Date de dépôt: 16.11.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 27.11.1997 FR 9714939

(71) Demandeur: DASSAULT ELECTRONIQUE
F-92210 Saint-Cloud (FR)

(72) Inventeur: Cayrefourcq, Ian
75011 Paris (FR)

(74) Mandataire: Plaçais, Jean-Yves
Cabinet Netter,
40, rue Vignon
75009 Paris (FR)

(54) **Dispositif électro-optique, notamment pour la répartition optique**

(57) Une structure multicouches (S,1-3) est surmontée de lignes primaires parallèles (4-1,4-2) qui définissent, dans les régions placées au-dessous d'elles, des guides d'ondes opérant selon un premier mode de propagation. Au moins moyen de commande électro-optique (E-1) est placé à un endroit choisi entre chaque couple de lignes primaires et autorise, dans certaines conditions, l'existence locale d'un second mode de propagation intéressant ensemble les deux régions, de sorte que le transfert du premier mode entre les deux guides qui l'encadrent puisse être contrôlé par action sur le second mode. Cela permet de réaliser un répartiteur d'énergie reposant sur une architecture dite "en cascade".

FIG.1

**Description**

L'invention concerne les dispositifs susceptibles d'applications en optoélectronique, et notamment ceux capables de répartir un mode de propagation d'une onde lumineuse entre plusieurs voies.

De tels dispositifs sont notamment utilisés dans le domaine des télécommunications où il est fréquemment nécessaire de transférer une onde lumineuse porteuse d'informations d'une voie (guide d'onde) vers une ou plusieurs autres voies. On entend ici par transfert soit une commutation dans laquelle l'onde lumineuse est intégralement aiguillée d'une voie vers une autre, soit une opération consistant à répartir l'onde lumineuse entre au moins deux voies. Les composants optoélectroniques sont particulièrement adaptés à ce type de fonction lorsque la place disponible est faible et que par ailleurs la consommation électrique est limitée.

On connaît déjà des dispositifs optiques, généralement à base de semiconducteurs, qui fonctionnent en commutation soit par transformation adiabatique de modes de l'onde lumineuse (connus sous les acronymes anglais DOS ou COSTA), soit par réflexion interne totale (connus sous l'acronyme anglais TIR), soit encore par couplage de modes (connus sous l'acronyme anglais EODC).

L'invention concerne plus précisément les dispositifs du dernier type (EODC), et plus particulièrement encore ceux qui comprennent une structure multicouches surmontée de deux lignes primaires au moins partiellement parallèles et agencée pour définir dans deux régions, au droit des lignes primaires, deux guides d'ondes opérant selon un premier mode de propagation, ainsi qu'un moyen de commande électro-optique placé à un endroit choisi pour faire varier le couplage entre les deux guides d'onde.

Un tel dispositif est décrit notamment dans le document de M.Schienle, G.Wenger, S.Eichinger, J.Müller, L.Stoll, et G.Müller, "One by eight InP/InGaAsP optical matrix switch with low insertion and high cross-talk suppression", IEEE Journal of Lightwave technology, vol 14 n°5, mai 1995. Il comprend plus précisément un premier segment de ligne définissant un premier guide d'onde et dont l'extrémité de "sortie" est encadrée par les extrémités "d'entrée" de deux autres segments de lignes, définissant également des guides d'onde et recouvertes d'une métallisation formant électrode d'alimentation en courant. Les trois segments de lignes sont parallèles entre eux. Pour transférer une onde du premier guide vers l'une des entrées des deux autres guides il est nécessaire d'alimenter en courant l'une au moins des deux électrodes.

En raison de son architecture de type 1x2 pour chaque guide d'onde, un tel dispositif devient vite un gros consommateur de courant lorsque le nombre de guides d'onde devient important. Par ailleurs, ce dispositif ne permet de répartir l'onde sur deux guides qu'à partir du moment ou les deux électrodes placées à l'extrémité du guide d'onde par lequel arrive l'onde lumineuse sont alimentés en courant, ce qui accroit encore la consommation de courant. De plus, l'onde qui circule initialement dans le premier guide d'onde ne peut pas rester dans celui-ci étant donné que la ligne qui le définit s'interrompt sensiblement au niveau des entrées des deux guides qui l'encadrent. Cela rend, par conséquent, le dispositif encombrant, puisqu'il impose une architecture de type "1x2" pour chaque guide d'onde par lequel arrive une onde donnée. Ainsi, pour réaliser un commutateur de type 1x16, il est obligatoire d'utiliser 4 niveaux de guides d'onde.

L'invention a donc pour but de remédier à tout ou partie des inconvénients précités.

Elle propose pour ce faire un dispositif électro-optique, du type comprenant, de façon connue, une structure multicouches surmontée de deux lignes primaires au moins partiellement parallèles, et agencée pour définir dans deux régions deux guides d'ondes opérant selon un premier mode de propagation, et un moyen de commande électro-optique placé à un endroit choisi pour faire varier le couplage entre les deux guides, le dispositif étant remarquable en ce que son moyen de commande électro-optique est placé entre les deux lignes primaires et est agencé, d'une part, pour autoriser localement un second mode de propagation intéressant ensemble les deux régions, et d'autre part, pour contrôler le transfert du premier mode entre les deux guides qui l'encadrent en agissant principalement sur ce second mode.

On entend ici par structure multicouches, un empilement comportant au moins une couche dite "de confinement" inférieure et une couche dite "de confinement" supérieure placées de part et d'autre d'une couche dite "de guidage d'onde lumineuse", les lignes primaires étant placées sur la couche de confinement supérieure, à l'opposé de la couche de guidage, et les matériaux et dimensions des couches et lignes primaires étant choisis pour définir, sensiblement au droit des lignes primaires, deux guides d'ondes opérant selon un premier mode de propagation.

Désormais, un unique moyen de commande électro-optique suffit à faire passer une onde lumineuse d'un premier guide vers un second guide voisin, sans qu'il soit nécessaire d'interrompre ledit premier guide. Cela permet de réaliser une architecture dite "en cascade" dans laquelle la consommation électrique et l'encombrement sont réduits.

Préférentiellement, les premier et second modes de propagation de l'onde lumineuse sont respectivement de type symétrique et antisymétrique, un couplage entre ces deux modes s'établissant lorsque leur sommation donne une contribution non nulle.

Selon une autre caractéristique de l'invention, chaque moyen de commande électro-optique comprend un élément qui s'étend localement parallèlement à chacune des lignes primaires qui l'encadrent, dans une région où elles

2

sont parallèles entre elles, sur une longueur de couplage choisie en fonction d'au moins la longueur d'onde de l'onde lumineuse et des indices optiques effectifs de la structure dans les régions des guides d'onde, vus par les premier et second modes de cette onde lumineuse, les indices étant fonction au moins des matériaux formant la structure et des caractéristiques géométriques de cette structure.

Plus préférentiellement, cette longueur de couplage est proportionnelle au rapport entre la longueur d'onde de l'onde lumineuse et un multiple de la différence entre les indices optiques effectifs de la structure dans les régions des guides d'onde, vus respectivement par le premier mode et le second mode de l'onde lumineuse.

Selon encore une autre caractéristique de l'invention, chaque moyen de commande électro-optique est agencé pour agir sur le second mode par réduction des indices optiques effectifs de la structure, dans la région qui s'étend entre les guides d'onde.

Ainsi, en jouant sur les indices optiques effectifs, il est possible de gérer la proportion de l'onde lumineuse que l'on souhaite transférer vers un guide d'onde voisin, ou en d'autres termes le couplage entre ces deux modes. Ce transfert ou couplage pourra être partiel ou total.

Préférentiellement, cette réduction des indices optiques effectifs s'effectue par injection de courant électrique (ou en d'autres termes par "injection de porteurs") dans le moyen de commande électro-optique.

Encore plus préférentiellement, en cas de dépassement d'un seuil d'intensité de courant, le transfert du premier mode d'un guide d'onde vers le guide d'onde voisin est interdit, tandis qu'en cas d'une intensité de courant nulle, le transfert du premier mode d'un guide d'onde vers le guide d'onde voisin est automatique et quasiment intégral. Entre ces deux valeurs de courant, il y aura répartition de l'onde lumineuse entre le guide d'onde par lequel arrive l'onde et son voisin concerné, la répartition dans chacun des deux guides d'onde étant bien sûr fonction de l'intensité du courant injecté.

Dans un mode de réalisation où l'intensité du courant électrique de contrôle ne peut prendre que la valeur nulle et une valeur sensiblement supérieure ou égale au seuil, le dispositif fonctionne en tant que commutateur de type "tout ou rien".

Dans le but d'éviter des problèmes de diaphonie, l'élément du moyen de commande électro-optique est avantageusement formé en l'endroit choisi à des distances des deux lignes primaires qui l'encadrent choisies de sorte que cet élément se trouve placé plus près de la ligne primaire en dessous de laquelle la partie du premier mode doit être transférée au moins partiellement que de la ligne primaire en dessous de laquelle la partie du premier mode est extraite au moins partiellement.

Dans un mode de réalisation préféré de l'élément du moyen de commande électro-optique, celui-ci est formé d'une ligne secondaire qui s'étend parallèlement à chaque ligne primaire qui l'encadre sur la longueur de couplage associée et surmontée d'une métallisation raccordée à un moyen d'alimentation électrique propre à contrôler l'intensité du courant injecté dans cet élément. Ici, l'élément est donc réalisé selon la même technologie que les lignes primaires, si bien qu'il définit lui-même localement, dans la région qui se trouve placée au-dessous de lui, un guide d'onde.

Selon encore une autre caractéristique de l'invention, toutes les lignes, qu'elles soient primaires ou secondaire(s) sont formées dans un matériau sensiblement identique au matériau formant la couche de confinement supérieure, ce qui permet de simplifier notablement le procédé de réalisation du dispositif.

Selon encore une autre caractéristique de l'invention, toutes les couches de confinement et de guidage, et les lignes primaires et secondaire(s) sont formées dans des matériaux semiconducteurs.

Dans ce cas, les couches de, confinement sont réalisées de préférence dans un matériau semiconducteur binaire, en particulier de type InP intrinsèque, la couche de guidage est réalisée de préférence dans un matériau semiconducteur quaternaire accordé en maille avec le matériau binaire formant les couches de confinement, en particulier de type InGaAsP intrinsèque, et les lignes primaires et secondaire(s) sont formées de préférence dans des matériaux semiconducteurs binaires, en particulier de type InP dopé p.

De plus, dans le cas d'un choix de matériaux semiconducteurs, les lignes primaires et secondaire(s) sont préférentiellement réalisées à partir d'une technique choisie parmi l'épitaxie sélective en phase vapeur ou gazeuse, l'attaque chimique sélective et la gravure.

Dans la description qui suit, faite à titre d'exemple, on se réfère aux dessins annexés, sur lesquels

- la figure 1 illustre schématiquement un dispositif selon l'invention dans une première application à la commutation/répartition de type 1x4; et

- la figure 2 est une vue en coupe de la partie du dispositif de la figure 1 encadrée par des pointillés.

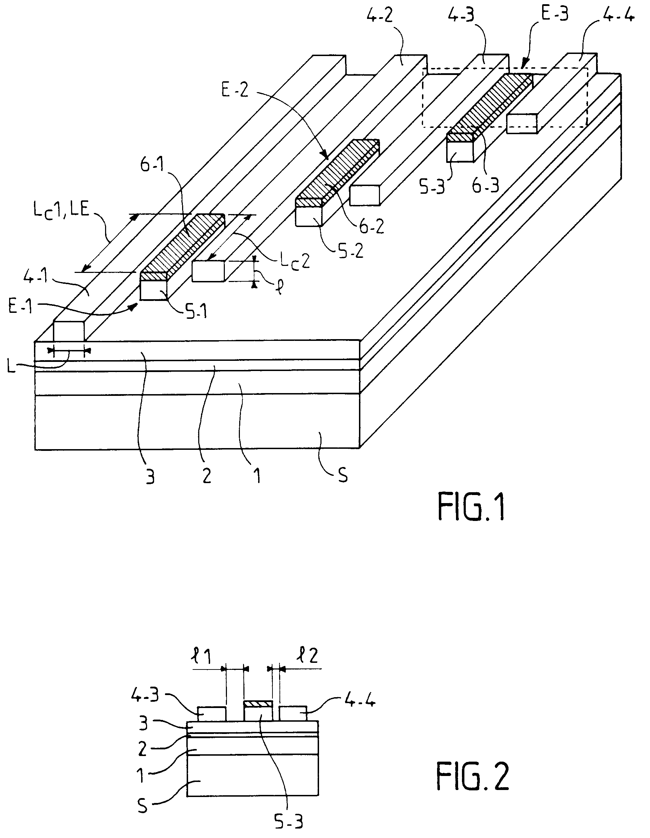

Sur les figures 1 et 2 se trouve illustré schématiquement un dispositif électro-optique selon l'invention, dans un premier mode de réalisation, non limitatif. Ici, le dispositif électro-optique forme un commutateur/répartiteur de type "1x4" permettant, à partir d'une entrée, d'alimenter une sortie au moins parmi quatre sorties.

Dans ce qui suit, le dispositif est constitué à partir d'une structure formée d'un empilement de couches réalisé, à titre d'exemple préférentiel, à partir de matériaux semi conducteurs. En fait, toute structure multicouches permettant de définir des guides d'ondes sensiblement parallèles entre eux, au moins sur des portions, et, sensiblement dans un même plan, peut être envisagée pourvu qu'un moyen de commande électrooptique selon l'invention permette le contrôle du transfert d'une onde lumineuse d'un guide d'onde vers un autre guide d'onde.

Dans l'exemple illustré sur les figures 1 et 2 (ainsi que 3 et 4), la structure comprend une première couche de confinement 1, réalisée de préférence dans un matériau binaire de type InP intrinsèque (non dopé) au-dessus de laquelle se trouve placée une couche de guidage 2, réalisée de préférence dans un matériau quaternaire de type InGaAsP accordé en maille avec le matériau de guidage (ici InP), ainsi qu'une seconde couche de confinement 3, réalisée également de préférence dans un matériau binaire de type InP intrinsèque. Une telle structure ne permettrait pas à elle seule de définir des guides d'ondes locaux (longitudinaux). Pour obtenir un tel résultat, la structure comporte en des endroits choisis, ici placés périodiquement au-dessus de la seconde couche de confinement 3 en InP intrinsèque, des lignes "primaires" 4-i parallèles entre elles, et de préférence réalisées dans un matériau binaire du type de celui utilisé pour les couches de confinement, à savoir en InP, mais cette fois-ci dopé p+.

En fait, comme cela est bien connu de l'homme de l'art, en rajoutant localement un matériau approprié (ici les lignes primaires 4-i) au-dessus d'un empilement de deux couches de confinement encadrant une couche de guidage, on modifie l'indice optique effectif dans la région placée au-dessous du matériau approprié rajouté. Une onde lumineuse de longueur d'onde $\lambda$ choisie peut alors être confinée dans cette région, sensiblement centrée sur la couche de guidage 2. On définit ainsi au droit de chaque ligne primaire un guide d'onde dans lequel une onde lumineuse, et plus précisément au moins un premier mode de propagation de celle-ci peut se propager.

Il est clair que les proportions utilisées pour les matériaux qui constituent les couches et les lignes primaires, ici de l'indium, du phosphore, du gallium et de l'arsenic, ainsi que les épaisseurs respectives des couches et les dimensions des lignes primaires, sont choisies de manière à permettre le guidage local de l'onde lumineuse de longueur d'onde $\lambda$ choisie.

A titre d'exemple non limitatif, dans le cadre du guidage d'une onde lumineuse de longueur d'onde $\lambda$ égale à 1,55 $\mu$m, on choisira pour chacune des couches de la structure les épaisseurs suivantes :

- première couche de confinement 1 en InP intrinsèque : 0,6 microns;
- couche de guidage 2 en InGaAsP (de gap de 1,15$\mu$m) : 0,2 $\mu$m;
- seconde couche de confinement 3 en InP intrinsèque: 1,5 $\mu$m;
- lignes primaires 4-i (i= 1 à 4) en InP dopées p+ : 0,6 $\mu$m.

Au-dessus des lignes primaires 4-i, dans le but d'optimiser l'injection de porteurs dans la structure, et donc d'améliorer le contact ohmique, on pourra placer une couche terminale, de préférence dans un matériau ternaire de type InGaAs dopé p+. Dans un tel cas, et dans l'exemple décrit, cette couche est de préférence d'une épaisseur de 0,3 $\mu$m.

Par ailleurs, la largeur L et la hauteur l de chaque ligne primaire seront dans cet exemple sensiblement égaux, respectivement, à 4 $\mu$m et 1,8 $\mu$m, ces lignes primaires 4-i étant espacées les unes des autres, périodiquement, d'une distance d'environ 7 $\mu$m.

Toujours de préférence, le dopage du matériau formant les lignes primaires 4-i est, dans cet exemple, de l'ordre de $10^{18}$, tandis que le dopage du matériau de la couche terminale en InGaAs est d'environ $10^{19}$. La structure décrite précédemment est, toujours de préférence, placée sur un substrat S en InP dopé n+.

De préférence, les différentes couches formant la structure, à savoir les couches de confinement 1 et 3, la couche de guidage 2, ainsi que la couche à partir de laquelle sont formées les lignes primaires 4-i, sont obtenues par croissance sur un substrat S en InP grâce à une technique d'épitaxie, comme par exemple par épitaxie par jet moléculaire (MBE) et plus préférentiellement par épitaxie par jet moléculaire de source de gaz (GSMBE).

Bien entendu, d'autres types de croissance pourront être envisagés, comme par exemple celle par dépôt en phase vapeur de composés organométalliques (MOCVD).

Il a été précisé ci-avant qu'il était préférable que les lignes primaires sont formées à partir d'une couche "complète" à l'aide par exemple d'une technique de gravure par ions réactifs (RIE) sous plasma oxygène, ou bien par attaque chimique sélective. Mais, il est clair que d'autres techniques peuvent être utilisées, comme par exemple l'épitaxie sélective. Dans ce cas, il n'est bien évidemment pas lieu de prévoir une couche complète pour les lignes primaires.

La Demanderesse s'est aperçue qu'en plaçant de façon judicieuse un élément de commande électro-optique E-j (j = 1 à 3 sur la figure 1) de dimensions prédéterminées, en un endroit choisi entre deux lignes primaires voisines 4-i et 4-(i+1), il était possible de transférer une onde lumineuse entre les deux guides d'ondes définis par les lignes primaires 4-i et 4-(i+1). En d'autre termes, il est possible de contrôler le transfert complet de l'onde, en réalisant un commutateur de type tout ou rien, ou le transfert partiel de cette onde en réalisant un répartiteur d'énergie.

Pour ce faire, l'élément électro-optique E-j doit permettre localement, c'est-à-dire dans la région au-dessus de laquelle il est placé, la propagation d'un second mode de propagation de l'onde lumineuse intéressant les deux guides d'ondes voisins, ensemble. En effet, comme le sait l'homme de l'art, lorsque deux modes de propagation d'une onde lumineuse coexistent dans une même région, il peut survenir dans certaines conditions un couplage de ces modes, induisant un déplacement physique du premier mode.

L'élément de commande électro-optique 5-j doit par conséquent définir, comme les lignes primaires 4-i, mais sous contrôle, un guide d'onde local dit "de transfert" dans la région qui se trouve placée en-dessous de lui.

Dans le mode de réalisation illustré sur les figures, l'élément électro-optique E-j est formé d'une ligne secondaire 5-j propre à définir, tout comme les lignes primaires 4-i, au droit de celui-ci, un guide d'onde. De préférence, de telles lignes secondaires 5-j sont réalisées en même temps que les lignes primaires 4-i, et par conséquent à partir de la même technique (gravure, attaque chimique ou épitaxie sélective) et dans le même matériau, c'est-à-dire dans l'exemple illustré en InP dopé p+.

Les largeur L et hauteur l de chaque ligne secondaire 5-j sont sensiblement identiques à celles des lignes primaires 4-i (dans cet exemple L = 4 $\mu$m, et l = 1,8 $\mu$m). En revanche leur extension (longitudinale) parallèlement aux lignes primaires 4-i doit impérativement être égale ou supérieure à un nombre entier de fois la longueur de couplage $L_C$ nécessaire au couplage effectif entre un guide d'onde défini par une ligne primaire, dans lequel circule l'onde lumineuse, et une portion de guide d'onde voisine définie par une ligne secondaire et qui va servir au transfert vers un guide d'onde voisin défini par une ligne primaire voisine. En fait, cette longueur définit la distance minimale assurant que deux modes de propagation, par exemple symétrique et antisymétrique, et par conséquent possédant des vitesses de propagation différentes, vont pouvoir se sommer de façon constructive.

Cette longueur de couplage $L_C$ peut être déterminée à partir des équations de propagation d'une onde lumineuse, et plus précisément de ses modes de propagation. Elle est donnée par la formule suivante :

$$L_c = \frac{\lambda}{2(n_{even} - n_{odd})}$$

où $n_{even}$ et $n_{odd}$ désignent respectivement les indices optiques effectifs des premiers et seconds modes de propagation de l'onde lumineuse de longueur d'onde $\lambda$ dans le guide d'onde. Ces deux indices sont notamment fonction des matériaux utilisés pour former la structure, des épaisseurs de ces matériaux, et des caractéristiques géométriques de la structure, dont la distance entre guides d'onde.

Il est important de noter ici, qu'étant donné que la distance entre un guide d'onde et la portion de guide d'onde voisine influe sur la longueur de couplage $L_C$ entre ces deux guides, la première longueur de couplage $L_C 1$ entre un premier guide et la portion de guide voisine, et la seconde longueur de couplage $L_C 2$ entre un second guide voisin du premier (et avec lequel ils encadrent la portion de guide) et ladite portion de guide voisine, ne seront égale qu'à condition que ladite portion de guide d'onde soit placée à égale distance des premier et second guides d'onde.

Dans l'exemple décrit en détail précédemment et illustré sur la figure 1, seulement à titre d'exemple, les deux longueurs de couplage $L_C 1$ et $L_C 2$ ne sont pas identiques du fait que la ligne secondaire E-1 définissant la portion de guide d'onde est placée plus près de la seconde ligne primaire 4-2 que de la première ligne primaire 4-1 (les raisons de cet écart seront données plus loin). Ainsi, une première longueur de couplage $L_C 1$=LE d'environ 800 $\mu$m est nécessaire au transfert du premier mode symétrique du premier guide d'onde, défini par la première ligne primaire 4-1, vers la portion de guide d'onde de transfert, définie par la première ligne secondaire E-1, tandis qu'une seconde longueur de couplage $L_C 2$ d'environ 600 $\mu$m est nécessaire au transfert du premier mode symétrique de la portion de guide d'onde de transfert (E-1) vers le second guide d'onde, défini par la seconde ligne primaire 4-2.

Il est clair que l'élément électro-optique E-j composé de la seule ligne secondaire 5-j assure automatiquement le transfert quasiment intégral du premier mode de l'onde d'un premier guide vers un second guide sans qu'il soit nécessaire d'agir sur cet élément électro-optique. Cependant, si l'on souhaite réaliser un véritable commutateur ou mieux un répartiteur d'énergie, il est nécessaire que l'élément électro-optique E-j puisse interdire, complètement ou partiellement, le transfert de l'onde lumineuse, et par conséquent le couplage de ses premier et second modes, d'un guide d'onde à l'autre.

De façon préférentielle, le contrôle du transfert (ou du couplage) s'effectue par un contrôle de la valeur des indices optiques effectifs de la structure dans la région placée sous la ligne secondaire 5-j, vus par les premier et second modes.

Pour ce faire, il est particulièrement intéressant d'injecter dans la ligne secondaire 5-j un courant électrique, éventuellement d'intensité variable (si l'on souhaite réaliser un répartiteur d'énergie), ou en d'autres termes d'injecter des porteurs, par exemple des électrons.

Pour atteindre cet objectif, on peut revêtir la face supérieure (opposée à la seconde couche de confinement 3) de chaque ligne secondaire 5-j, d'un contact ohmique réalisé, par exemple, en pt/ti/pt/Au. Un tel dépôt de contact ohmique peut être obtenu à l'aide, par exemple, d'une technique comprenant une étape de lithographie suivie d'une étape d'évaporation, bien connue de l'homme de l'art et qu'il est par conséquent inutile de décrire ici. Le contact ohmique de chaque élément E-j est alors relié à un module de commande qui peut gérer leurs alimentations respectives, via, par exemple, des "câbles électriques". Bien entendu, on peut envisager de faire un dispositif tout intégré dans lequel le module de commande ainsi que les connexions sont intégrés à la structure.

L'injection de porteurs dans la ligne secondaire 5-j a pour conséquence, lorsqu'elle dépasse un certain seuil prédéterminé fonction des matériaux composant la structure, de faire varier les indices optiques effectifs dans la région qui s'étend entre les deux guides d'onde où elle se trouve placée (et plus particulièrement en dessous), d'une valeur telle que le second mode de l'onde lumineuse ne peut plus s'y propager, interdisant par conséquent tout couplage entre le premier et le second mode.

Lorsque l'intensité du courant injecté dans une ligne secondaire 5-j via son contact ohmique 6-j est comprise entre la valeur nulle et ledit seuil prédéterminé, il est alors possible de contrôler l'amplitude du couplage, de sorte qu'on peut répartir l'onde lumineuse, dans les deux guides encadrant l'élément optique concerné. On crée ainsi un répartiteur d'énergie.

Il est clair que lorsque l'intensité du courant injecté dans les modules électro-optiques E-j ne peut prendre que la valeur nulle ou une valeur supérieure ou égale au seuil prédéterminé, alors le dispositif fonctionne en tant que commutateur tout ou rien.

Le comportement électrique du dispositif, ou en d'autres termes l'intensité nécessaire au contrôle du transfert d'une onde lumineuse entre deux guides voisins, peut être déduit, de la résolution des équations données ci-après :

- l'équation de Poisson (1) :

$$\frac{\partial^2 V_x}{\partial x^2} = Nd - Na + p - n$$

- des équations des courants des porteurs de charge (2) :

$$j_n = -nv_n = \mu_n(nE_x + \frac{\partial n}{\partial x})$$

$$j_p = +nv_p = \mu_p(pE_x - \frac{\partial p}{\partial x})$$

$$j_t = j_n + j_p + \varepsilon\frac{\partial E}{\partial t}$$

où les indices n et p désignent respectivement les porteurs de types électrons et trous, n et p sont respectivement les densités de porteurs de type électrons et trous, les j désignent des densités de courant de porteurs, v et $\mu$ désignent respectivement les vitesse et mobilité des porteurs;

- et des équations de continuité (3) :

$$\frac{\partial n}{\partial t} = \frac{\partial J_n}{\partial x} + g - u, \quad et \quad \frac{\partial p}{\partial t} = -\frac{\partial J_p}{\partial x} + g - \iota$$

où g et u désignent respectivement les taux de génération et de recombinaison (électron-trou) des porteurs; et où :

$$E_x = -\frac{\partial V_x}{\partial x}, \; et \; u = \frac{np - ni^2}{\tau_n(p + ni) + \tau_p(n + ni)}$$

où ni désigne la densité de porteur dans le semi conducteur intrinsèque et les $\tau$ les temps de recombinaison des porteurs,

- ainsi qu'en utilisant la relation de HUNSPERGER (4) qui donne la densité de porteur en fonction de la variation de l'indice de réfraction :

$$n - n_0 = -\frac{1}{2} \frac{N^2 \lambda^2 q^2}{n_0 m^* \varepsilon_0 \pi^2 c^2}$$

où N désigne la densité de porteur, q la charge de l'électron, $n_0$ désigne l'indice optique initial avant injection de porteurs, m* désigne la masse effective de l'électron.

A l'aide d'une structure telle que celle illustrée sur la figure 1, laquelle est composée de quatre guides d'ondes définis par quatre lignes primaires 4-1 à 4-4, et comprenant entre chaque paire de lignes primaires voisines un élément électro-optique de commande E-1 à E-3 relié à un module de commande (non représenté), il est alors possible en injectant une onde lumineuse à l'entrée du premier guide d'onde défini par la première ligne primaire 4-1 (l'entrée étant matérialisée par une flèche) de transférer cette onde lumineuse partiellement ou totalement du premier guide d'onde vers le second et/ou le troisième et/ou le quatrième, selon que l'on injecte des porteurs dans un ou plusieurs éléments de commande électro-optiques 5-j et selon l'intensité du courant injecté. Ainsi, si aucun des trois éléments électro-optiques de commande E-1 à E-3 n'est alimenté en courant, alors l'onde injectée dans le premier guide ressortira par la sortie du quatrième guide définie par la quatrième ligne primaire 4-4. En revanche, si seule la première ligne secondaire 5-1 n'est pas alimentée en courant, mais que seule la seconde ligne secondaire 5-2 est alimentée par un courant supérieur ou égal au seuil prédéterminé, alors l'onde lumineuse ressortira par l'extrémité de sortie du second guide d'onde défini par la seconde ligne primaire 4-2.

De très nombreux autres cas peuvent être envisagés, selon que l'intensité du courant d'alimentation des éléments de commande électro-optique E-j peut être réglée de façon continue, ou bien que celle-ci est de type binaire. Ainsi, dans la première hypothèse où l'intensité du courant est réglable, on peut envisager avec le dispositif illustré sur la figure 1 de délivrer quatre portions de l'onde lumineuse, entrée par le premier guide d'onde, au niveau des quatre sorties des quatre guides d'onde.

Dans l'exemple illustré sur la figure 1, les lignes primaires 4-i ne présentent pas toutes des longueurs identiques, du fait que le dispositif est ici conçu pour fonctionner en tant que commutateur de type 1x4. Mais il est clair que toutes les lignes primaires pourraient être de longueurs sensiblement équivalentes, ou bien plusieurs d'entre elles d'une première longueur, et plusieurs autres d'entre elles d'une seconde longueur, de sorte qu'une onde lumineuse puisse être injectée dans le dispositif en plusieurs endroits différents.

Dans un mode de réalisation où les quatre lignes primaires présenteraient les mêmes extensions longitudinales, et où un ou plusieurs éléments de commande électro-optiques E-j seraient placés entre chaque paire de lignes primaires 4-i, on pourrait réaliser un répartiteur d'énergie 4x4, chaque entrée des guides d'onde pouvant recevoir l'onde lumineuse.

Il est cependant important de noter que dans le but d'obtenir un dispositif où les commutations sont "bijectives", c'est à dire qu'elles sont autorisées d'un premier guide vers un second tout comme du second vers le premier, il est préférable, si l'on veut n'utiliser qu'un seul élément de commande E-j (guide de transfert), de placer la ligne secondaire à égale distance des deux lignes primaires qui l'encadrent.

Cependant, un tel placement présente l'inconvénient de créer de la diaphonie et par conséquent des pertes de signal. Pour éviter cela, il serait préférable de couder localement l'une des deux lignes primaires qui encadrent une ligne secondaire juste après cette ligne secondaire (et donc en sortie de la zone de couplage), de sorte que les deux lignes primaires soient éloignées l'une de l'autre. En d'autres termes, il suffit que les lignes soient parallèles entre elles sur la longueur de couplage.

Cependant, dans les structures où une telle symétrie n'est pas utile, c'est à dire lorsque la commutation n'a besoin de se produire que dans un seul sens, toujours le même, il est préférable que la ligne secondaire 5-j soit plus proche de la ligne primaire 4-(i+1) dans laquelle l'onde lumineuse doit être transférée que de la ligne primaire 4-i dans laquelle circule l'onde lumineuse à transférer. Cela permet d'améliorer le transfert, et de limiter au maximum les effets de diaphonie.

Ce positionnement dissymétrique des lignes secondaires 5-j est mieux illustré sur la figure 2 qui représente la vue en coupe transversale de la structure au niveau de sa partie encadrée par des pointillés sur la figure 1.

Dans l'exemple décrit en détail précédemment, la Demanderesse s'est aperçu qu'il était avantageux que la ligne secondaire 5-j soit deux fois plus près de la ligne primaire 4-(i+1) du guide "récepteur" que de la ligne primaire 4-i du guide "émetteur". En fait, l'écartement optimal de chacune des deux lignes primaires peut être calculé a partir, notamment, des équations précitées. Ces écartements dépendent principalement de l'amplitude du confinement optique induit par la présence des lignes primaires et secondaires, et par conséquent de leur hauteur l. A titre d'exemple, et toujours en référence au dispositif décrit en détail précédemment, on choisira comme valeur de premier écartement 11 environ 2 μm et comme valeur de second 12 environ 1 μm.

Il est clair que de nombreuses variantes du dispositif décrit peuvent être envisagées. Ainsi, on pourrait placer plusieurs (au moins deux) éléments de commande de transfert (E-j) entre un ou plusieurs couples de lignes primaires 4-i et 4-(i+1) voisines de sorte qu'une ou plusieurs ondes lumineuses puissent être transférées d'un guide à l'autre et réciproquement. Il est certain qu'un tel mode de réalisation nécessite plusieurs lignes primaires qui s'étendent sur toute la longueur du dispositif, de sorte que l'onde ou les ondes puissent être introduites dans la structure en plusieurs endroits. Cela permettrait d'effectuer, par exemple un mélange d'onde lumineuse en provenance d'un premier guide d'onde et d'une seconde onde lumineuse en provenance d'un autre guide d'onde.

L'invention ne se limite pas aux modes de réalisation décrits ci-avant en référence aux figures, mais elle englobe toutes les variantes que pourra développer l'homme de l'art dans le cadre des revendications ci-après.

Ainsi, le nombre et les dimensions des guides d'ondes, ainsi que le nombre et les positions des différents moyens de commande électro-optique pourront varier selon les applications.

Par ailleurs, on a décrit un dispositif dans lequel on ne prévoyait qu'une seule structure en couches, mais il est clair que l'on pourrait envisager de superposer plusieurs structures les unes au dessus des autres, par exemple en enterrant les lignes primaires et secondaires à l'aide d'un matériau approprié, de façon à former un dispositif multiniveaux à haut degré d'intégration.

De plus, on a décrit un dispositif dans lequel les matériaux formant les couches de la structure étaient des semiconducteurs, mais il est clair que l'invention ne se limite pas à ces seuls matériaux. Ainsi, on pourrait envisager d'utiliser des polymères tels que le PMMA ou le PMGI, ou bien encore des matériaux diélectriques tels que le $SiO_2$.

Enfin, comme indiqué ci-avant, on pourrait envisager de superposer plusieurs structures dont les matériaux respectifs ne seraient pas identiques d'une structure à l'autre de façon à permettre le traitement (commutation/répartition) d'ondes lumineuses de longueurs d'onde différentes.

## Revendications

1. Dispositif électro-optique, du type comprenant une structure comportant au moins :

   - une couche de confinement inférieure (1) et une couche de confinement supérieure (3) placées de part et d'autre d'une couche de guidage d'onde lumineuse (2),
   - deux lignes primaires au moins partiellement parallèles (4-1,4-2), placées sur la couche de confinement supérieure (3), à l'opposé de la couche de guidage (2),
   - les matériaux et dimensions de ces couches et lignes primaires étant choisis pour définir, sensiblement au droit des lignes primaires (4-i), deux guides d'ondes opérant selon un premier mode de propagation, et
   - un moyen de commande électro-optique (E-1) placé à un endroit choisi pour faire varier le couplage entre les deux guides,

   caractérisé en ce que le moyen de commande électro-optique (E-1) est placé entre les deux lignes primaires (4-1,4-2) et est agencé, d'une part, pour autoriser localement un second mode de propagation intéressant ensemble les deux guides d'onde, et d'autre part, pour contrôler le transfert du premier mode entre les deux guides d'onde qui l'encadrent en agissant principalement sur ce second mode.

2. Dispositif électro-optique selon la revendication 1, caractérisé en ce que chaque moyen de commande électro-optique comprend un élément (E-j) qui s'étend parallèlement à chacune des lignes primaires (4-i) qui l'encadrent, dans une région où elles sont sensiblement parallèles entre elles, sur une longueur de couplage ($L_C$) choisie en fonction au moins de la longueur d'onde de l'onde lumineuse et des indices optiques effectifs de la structure dans les régions des guides d'onde, vus par les premier et second modes de ladite onde lumineuse, lesdits indices étant fonction au moins des matériaux formant ladite structure et des caractéristiques géométriques de cette structure.

3. Dispositif électro-optique selon la revendication 2, caractérisé en ce que la longueur de couplage ($L_C$) est proportionnelle au rapport entre la longueur d'onde ($\lambda$) de l'onde lumineuse et un multiple de la différence entre les indices optiques effectifs de la structure dans les régions des guides d'onde, vus respectivement par le premier mode et le second mode de l'onde lumineuse.

4. Dispositif électro-optique selon la revendications 1 à 3, caractérisé en ce que le moyen de commande électro-optique (E-j) est propre à agir sur le second mode par réduction des indices optiques effectifs de la structure, dans la région qui s'étend entre lesdits guides d'onde.

5. Dispositif électro-optique selon la revendication 4, caractérisé en ce que la réduction des indices s'effectue par injection de courant électrique dans ledit moyen de commande électro-optique (E-j).

**6.** Dispositif électro-optique selon la revendication 5, caractérisé en ce qu'en cas de dépassement d'un seuil d'intensité de courant, le premier mode ne peut pas être transféré d'un guide d'onde vers le guide d'onde voisin, et en ce qu'en cas d'une intensité de courant nulle, le premier mode est transféré sensiblement intégralement d'un guide d'onde vers le guide d'onde voisin.

**7.** Dispositif électro-optique selon la revendication 6, caractérisé en ce que l'intensité du courant électrique de contrôle ne peut prendre que la valeur nulle et une valeur supérieure au seuil, de sorte que ledit dispositif fonctionne en tant que commutateur de type "tout ou rien".

**8.** Dispositif électro-optique selon l'une des revendications 2 et 3, caractérisé en ce que l'élément du moyen de commande électro-optique (E-j) est formé en l'endroit choisi à des distances (11,12) des deux lignes primaires qui l'encadrent choisies de sorte que ledit élément se trouve placé plus près de la ligne primaire en dessous de laquelle la partie du premier mode doit être transférée au moins partiellement que de la ligne primaire en dessous de laquelle la partie du premier mode est extraite au moins partiellement.

**9.** Dispositif électro-optique selon l'une des revendications 2 à 8, caractérisé en ce que l'élément de moyen de commande électro-optique (E-j) comprend une ligne secondaire s'étendant parallèlement à chaque ligne primaire (4-i) qui l'encadre sur la longueur de couplage associée ($L_C$) et surmontée d'une métallisation (6-j) raccordée à un moyen d'alimentation électrique propre à contrôler l'intensité du courant injecté dans ledit élément.

**10.** Dispositif électro-optique selon la revendication 9, caractérisé en ce que les lignes primaires (4-i) et secondaire(s) (5-j) sont formées dans un matériau sensiblement identique au matériau formant la couche de confinement supérieure (3).

**11.** Dispositif électro-optique selon l'une des revendications 9 et 10, caractérisé en ce que les couches de confinement et de guidage (1-3), et les lignes primaires et secondaire(s) (4,5) sont formées dans des matériaux semiconducteurs.

**12.** Dispositif électro-optique selon la revendication 11, caractérisé en ce que les couches de confinement (1,3) sont réalisées dans un matériau semiconducteur binaire, en particulier de type InP intrinsèque, en ce que la couche de guidage (2) est réalisée dans un matériau semiconducteur quaternaire accordé en maille avec ledit matériau binaire formant les couches de confinement, en particulier de type InGaAsP intrinsèque, et en ce que les lignes primaires (4-i) et secondaire(s) (5-j) sont formées dans des matériaux semiconducteurs binaires, en particulier de type InP dopé p.

**13.** Dispositif électro-optique selon l'une des revendications 9 à 12, caractérisé en ce que les lignes primaires (4-i) et secondaire(s) (5-j) sont réalisées à partir d'une technique choisie parmi l'épitaxie sélective en phase vapeur ou gazeuse, l'attaque chimique sélective et la gravure.

**14.** Dispositif électro-optique selon l'une des revendications 1 à 13, caractérisé en ce qu'il comprend au moins trois lignes primaires (4-1 à 4-3) séparées deux à deux par au moins un moyen de commande électro-optique (E-1 et E-2), respectivement, lesdits moyens de commande électro-optique étant répartis le long des lignes primaires selon un schéma choisi de sorte que la partie du premier mode puisse être transférée, sous contrôle, d'un guide d'onde à l'autre.

**15.** Dispositif électro-optique selon l'une des revendications 1 à 14, caractérisé en ce que les premier et second modes sont respectivement de type symétrique et antisymétrique.

FIG.1

FIG.2

**Office européen**

**des brevets**

## RAPPORT DE RECHERCHE EUROPEENNE

Numéro de la demande

EP 98 40 2831

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 119 449 A (KOMATSU KEIRO ET AL) 2 juin 1992 * colonne 2, ligne 57 - colonne 3, ligne 4 * * colonne 3, ligne 52 - colonne 4, ligne 57; figures 2,5 * | 1 | G02F1/035 G02F1/313 |
| A | US 5 408 566 A (EDA KAZUO ET AL) 18 avril 1995 * colonne 4, ligne 11 - colonne 5, ligne 46; figures 1,2 * | 1 | |
| A | PATENT ABSTRACTS OF JAPAN vol. 014, no. 442 (P-1109), 20 septembre 1990 & JP 02 173621 A (OKI ELECTRIC IND CO LTD), 5 juillet 1990 * abrégé * -& JP 02 173621 A | 1 | |

**DOMAINES TECHNIQUES RECHERCHES (Int.Cl.6)**

G02F

Le présent rapport a été établi pour toutes les revendications

| Lieu de la recherche | Date d'achèvement de la recherche | Examinateur |
|---|---|---|
| BERLIN | 22 mars 1999 | MANNTZ, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 0 919 848 A1

**ANNEXE AU RAPPORT DE RECHERCHE EUROPEENNE
RELATIF A LA DEMANDE DE BREVET EUROPEEN NO.**     EP 98 40 2831

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-03-1999

| Document brevet cité au rapport de recherche | Date de publication | Membre(s) de la famille de brevet(s) | Date de publication |
|---|---|---|---|
| US 5119449 A | 02-06-1992 | JP 2058245 C | 10-06-1996 |
| | | JP 2226232 A | 07-09-1990 |
| | | JP 7086624 B | 20-09-1995 |
| | | DE 69012608 D | 27-10-1994 |
| | | DE 69012608 T | 11-05-1995 |
| | | EP 0385402 A | 05-09-1990 |
| US 5408566 A | 18-04-1995 | JP 2606525 B | 07-05-1997 |
| | | JP 6289343 A | 18-10-1994 |
| | | JP 2581486 B | 12-02-1997 |
| | | JP 6289344 A | 18-10-1994 |
| | | JP 2574594 B | 22-01-1997 |
| | | JP 6289341 A | 18-10-1994 |
| | | DE 69303654 D | 22-08-1996 |
| | | DE 69303654 T | 13-02-1997 |
| | | EP 0567051 A | 27-10-1993 |
| | | KR 134763 B | 23-04-1998 |

EPO FORM P0460

Pour tout renseignement concernant cette annexe : voir Journal Officiel de l'Office européen des brevets, No.12/82

12